# EUROPÄISCHE PATENTSCHRIFT

(11) **EP 0 900 761 B1**
(45) Veröffentlichungstag und Bekanntmachung des Hinweises auf die Patenterteilung: **12.11.2003**
(21) Anmeldenummer: 98890047.8
(22) Anmeldetag: 17.02.1998
(51) Int. Cl.: B67C 3/06, A23L 2/54

(54) **Verfahren zur Herstellung und Abfüllung von mit Sauerstoff oder einem Sauerstoff-Gasgemisch angereicherten Flüssigkeiten sowie Getränk**
Method for preparing and filling of oxygen-enriched or oxygen containing gas enriched liquids and beverage prepared by such a method
Procédé de fabrication et de remplissage de liquides enrichis en oxygène ou enrichis d'un mélange de gaz contenant de l'oxygène et boisson obtenue par ce procédé

(30) Priorität: 04.09.1997 AT 148197; 31.10.1997 EP 97890215
(43) Veröffentlichungstag der Anmeldung: 10.03.1999
(73) Patentinhaber: Kramer & Co. OEG, 9300 St. Veit (AT)
(72) Erfinder: Köck, Herbert Hans, 9300 St. Veit/Glan (AT); Kramer, Hans Klaus, 9020 Klagenfurt (AT)
(74) Vertreter: Gibler, Ferdinand, Dipl.Ing. Dr. techn.

(56) Entgegenhaltungen:
- EP-A- 0 314 015
- EP-A- 0 365 867
- EP-A- 0 596 621
- WO-A-95/29130
- WO-A-95/32796
- AT-U- 1 699
- DE-A- 3 940 389
- DE-C- 19 529 955
- US-A- 3 832 474
- US-A- 5 006 352

## Beschreibung

Die Erfindung betrifft ein Verfahren zur Herstellung und Abfüllung von mit Sauerstoff oder einem Sauerstoff-Gasgemisch angereicherten Flüssigkeiten, insbesondere Getränken, in Behälter, insbesondere Flaschen, wobei die Flüssigkeit entgast, danach mit Sauerstoff und gegebenenfalls anderen Gasen in gelöster und/oder gebundener Form angereichert und in Behälter abgefüllt wird, woraufhin diese druckdicht verschlossen werden.

Bei bisher bekannten Verfahren dieser Art wird Sauerstoff unter hohem Druck in die vorgekühlte Flüssigkeit eingebracht, wodurch der Sauerstoff in dieser in gelöster Form aufgenommen wird. Es können dabei relativ hohe Werte an Sauerstoffgehalt erzielt werden, dieser geht aber bei Abfüllung der Flüssigkeit in Behälter wieder größtenteils verloren, sodaß kommerzielle Anwendungen zu keinem Erfolg geführt haben. Den mit Sauerstoff angereicherten Getränken ist nämlich nur dann eine medizinisch auch feststellbare Wirkung zuzuschreiben, wenn mehr als ungefähr 80 mg/l Sauerstoff auch tatsächlich in der Flüssigkeit vorliegen, wenn sie vom Konsumenten zu sich genommen wird.

Aus der WO 9 529 130 A geht ein Verfahren hervor, um eine Flüssigkeit mit Sauerstoff anzureichern. Das Wasser wird in einen verschlossenen Anreicherungskessel angereichert, welcher einen Sauerstoffdruck von mindestens 1,37 bar aufweist.

Die EP 0 365 867 A offenbart ein Verfahren und eine Vorrichtung zum Befüllen von Getränkedosen mit einer mit CO₂ angereicherten Flüssigkeit, wobei die Getränkedose zunächst durchgespült und anschließend mit einem Inertgas vorgespannt wird, wobei der Druck geringfügig unter dem eines Abfüllkessels liegt. Nach einem Druckausgleich mit dem Abfüllkessel wird die Dose aus diesem befüllt.

Da nun aber der bei der Anreicherung eingestellte Sauerstoffgehalt durch das Abfüllen in Flaschen, Dosen o.ä. gemäß dem Stand der Technik großteils verloren geht, können Getränke dieser Art nur aus direkter Produktion in unverschlossenem Zustand und somit in nur sehr kleinen, nicht gewinnbringenden Mengen vertrieben werden.

Aufgabe der Erfindung ist es daher, ein Verfahren der eingangs genannten Art anzugeben, mit dem der in einer Flüssigkeit gelöste und gebundene Sauerstoff bzw. Sauerstoff-Gasgemisch-Gehalt bei der Abfüllung in Behälter, insbesondere Flaschen und Dosen beibehalten werden kann.

Erfindungsgemäß wird dies dadurch erreicht, daß jeder einzelne zu füllende Behälter vor dem Befüllen mit angereicherter Flüssigkeit mit Sauerstoff oder einem Sauerstoff-Gasgemisch gefüllt und dabei unter einem ersten Druck vorgespannt wird, und daß nachfolgend die mit Sauerstoff oder einem Sauerstoff-Gasgemisch angereicherte Flüssigkeit unter einem zweiten, den ersten übersteigenden Druck in den druckdicht abgeschlossenen Behälter bis auf ein aus Sauerstoff bzw. Sauerstoffgemisch bestehendes, im Behälter verbleibendes Restvolumen im Bereich des oberen Behälterrandes gefüllt wird, wobei die Flüssigkeit von der Anreicherung bis zur Abfüllung unter einem gegenüber dem atmosphärischen Druck erhöhten Druck steht, der erst vor dem Verschließen des Behälters ausgeglichen wird.

Durch die Vorfüllung der Behälter mit Sauerstoff bleibt nach dem Abfüllvorgang zwischen dem Flüssigkeitspegel und dem oberen Behälterrand aufgrund der gegenüber Luft höheren Dichte des Sauerstoffes eine Sauerstoffhaube bestehen, die ein vorzeitiges Ausgasen des Sauerstoffes aus der angereicherten Flüssigkeit verhindert. Während des Einfüllvorganges werden die Behälter druckdicht abgeschlossen, wobei der von der Vorabfüllung überschüssig in den Behältern vorhandene Sauerstoff entweichen kann. Nach dem Öffnen des Druckverschlusses entspannt sich die Flüssigkeit, ohne daß dabei aufgrund der Sauerstoffhaube oberhalb des Flüssigkeitspegels nennenswert Sauerstoff entweicht. Wesentlich ist dabei, daß die Flüssigkeit von der Anreicherung bis zur Abfüllung ohne Unterbrechung immer unter einem höheren Druck als dem vorherrschenden AtmosphärenDruck steht, wobei dieser Druck, unter dem die Flüssigkeit steht, sich in den verschiedenen Stufen des Prozesses ändern kann, der Druckunterschied gegenüber der Umgebung aber erst vor dem Verschließen des Behälters ausgeglichen wird. Auf diese Weise kann der während des Anreicherungsvorganges in die Flüssigkeit eingebrachte Sauerstoff während des Abfüllens in der Flüssigkeit gehalten werden. Bei Abfüllen einer mit einem Sauerstoff-Gasgemisch angereicherten Flüssigkeit wird ebenfalls eine Vorabfüllung der Flaschen mit einem Sauerstoff-Gasgemisch vorgenommen, welches nach der Abfüllung eine entsprechende Gashaube bildet. Damit können auch bisher noch nicht realisierte Abfüllungen von Getränken, die eine Mischung aus Kohlendioxid und Sauerstoff enthalten, vorgenommen werden.

In weiterer Ausbildung der Erfindung kann vorgesehen sein, daß die mit Sauerstoff bzw. Sauerstoff-Gasgemisch angereicherte Flüssigkeit in einen Gaseinmischungsreaktor, in welchem die angereicherte Flüssigkeit vor dem Abfüllprozeß zwischengespeichert wird, vorzugsweise von oben, laminar einströmen gelassen wird.

Dadurch werden Wirbel in der einströmenden Flüssigkeit vermieden, die ein Entweichen des Sauerstoffes oder des Sauerstoff-Gasgemisches aus der Flüssigkeit zur Folge hätten.

Nach einem weiteren Merkmal gemäß einer Ausführungsform der Erfindung kann vorgesehen sein, daß der Sauerstoff bzw. das Sauerstoff-Gasgemisch der anzureichernden mittels einer Injektordüse, vorzugsweise eines Venturi-Rohrs, unter einem Zerstäubungsdruck beigemischt wird.

Die Injektordüse vergrößert die Oberfläche der anzureichernden Flüssigkeit um ein Vielfaches, sodaß auf diese Weise der Sauerstoff bzw. das Sauerstoff-Gasgemisch in hohen Werten zwischen 80 mg/l und 500 mg/l angereichert werden kann.

Gemäß einem weiteren Ausführungsbeispiel der Erfindung kann vorgesehen sein, daß vor dem ersten Durchlauf von angereicherter Flüssigkeit der Gaseinmischungsreaktor mit Sauerstoff bzw. Sauerstoff-Gasgemisch, vorzugsweise zu zwei Drittel, gefüllt und unter einem Reaktordruck, der kleiner als der Zerstäubungsdruck ist, vorgespannt wird, und daß danach die angereicherte Flüssigkeit den Gaseinmischungsreaktor durchströmen gelassen wird.

Durch die Zwischenspeicherung der angereicherten Flüssigkeit unter einer Sauerstoff- bzw. einer Sauerstoff-Gasgemisch-Atmosphäre wird die angereicherte Flüssigkeit in ihrem Zustand nach Verlassen der Injektordüse gehalten, wobei der Reaktordruck unter dem Wert des Zerstäubungsdruckes gewählt wird, da der Sauerstoff generell geringere Tendenz zum Ausgasen als etwa Kohlendioxid zeigt. Dennoch ist die Sauerstoff- bzw. Gasgemisch-Druckatmosphäre ein wesentlicher Bestandteil jener Maßnahmen, die den Anreicherungsgehalt der Flüssigkeit bis zum Abfüllen konstant hält, sodaß es sonst zu einem deutlich meßbaren Abfall des Sauerstoff- bzw. Sauerstoff-Gasgemisch-Gehalts in den abgefüllten Flaschen kommen würde.

In weiterer Ausbildung der Erfindung kann vorgesehen sein, daß der Flüssigkeitsfüllstand innerhalb des von der angereicherten Flüssigkeit durchströmten Gaseinmischungsreaktors zwischen einem Tiefst- und einem Höchststand, vorzugsweise zwischen 40% und 60%, gehalten wird, wobei bei Erreichen des Tiefststandes die kontinuierliche Zufuhr von Sauerstoff bzw. Sauerstoff-Gasgemisch zur Flüssigkeit vor dem Flüssigkeitseingang des Gaseinmischungsreaktors eingestellt wird und stattdessen in einem Umlaufbetrieb solange Sauerstoff bzw. Sauerstoff-Gasgemisch über einen Gasabführausgang aus dem Gaseinmischungsreaktor abgesaugt und der Flüssigkeit vor dem Flüssigkeitseingang des Gaseinmischungsreaktors zugeführt wird, bis der Höchststand der Flüssigkeit im Gaseinmischungsreaktor wieder erreicht ist, woraufhin der Flüssigkeit vor dem Flüssigkeitseingang des Reaktors wieder kontinuierlich Sauerstoff bzw. Sauerstoff-Gasgemisch zugeführt wird.

Die Änderungen im Füllstand sind produktionsbedingt, da es zu manchen Zeitpunkten zu einer größeren oder geringeren Auslastung der Füllanlage kommen kann. Durch die angewandte Zweipunktregelung des Flüssigkeitsstandes wird erreicht, daß bei Absinken desselben auf den Tiefststand es zu einer Überanreicherung mit Sauerstoff bzw. Sauerstoff-Gasgemisch der Flüssigkeit im Reaktor kommt.

Die Erfindung wird nachfolgend anhand dem in den Zeichnungen dargestellten Ausführungsbeispiel eingehend erläutert. Es zeigt dabei
Fig.1 ein Blockschaltbild einer Ausführungsform einer Anlage zur Durchführung des erfindungsgemäßen Verfahrens und
Fig.2 einen Querschnitt durch einen Flaschenhals nach der Abfüllung.

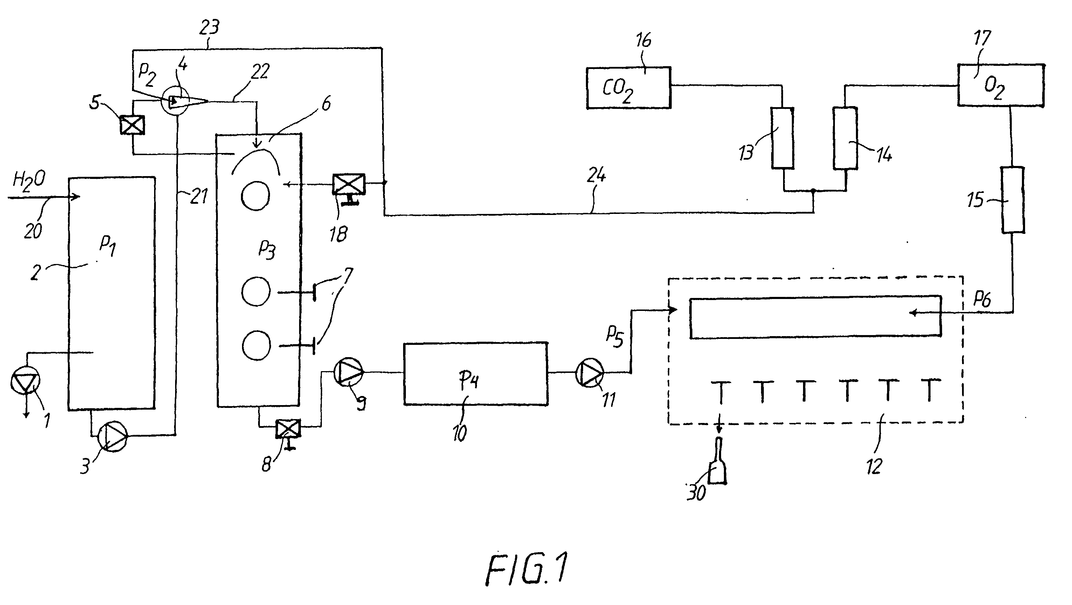

Mit der in Fig.1 dargestellten Anlage ist ein Verfahren zur Herstellung und Abfüllung von mit Sauerstoff oder einem Sauerstoff-Gasgemisch angereicherten Flüssigkeiten, insbesondere Getränken, in Behälter 30 für den Massenkonsum, wie Flaschen, Dosen o.ä., durchführbar, bei dem die Flüssigkeit entgast, danach mit Sauerstoff angereichert und in Behälter abgefüllt wird.

Eine Druckförderpumpe 3 fördert eine vorbestimmbare Menge an Flüssigkeit aus einem Vakuumreaktor 2, der über einen Einlauf 20 ständig mit Flüssigkeit versorgt wird, in einen ersten Mischeinlauf 21 einer Injektor-Düse 4. Die Flüssigkeit muß keiner Kühlung unterworfen werden, was sich gegenüber dem Stand der Technik besonders vorteilhaft auf die Energiekosten auswirkt (z.B. Quelltemperatur 8-20°C).

Als Flüssigkeit wird in diesem Ausführungsbeispiel Wasser mit Sauerstoff oder einem Sauerstoff-Gasgemisch versetzt, es kann aber jede andere als Getränk geeignete Flüssigkeit, z.B. Fruchtsaft, Wein, Spirituosen, Milch, Yoghurt u.s.w. dem erfindungsgemäßen Verfahren unterworfen werden. Über eine Vakuumpumpe 1 wird ein sehr niedriger Druck p₁ im Gasvolumen des Vakuumreaktors 2 eingestellt, wodurch das in den Vakuumreaktor 1 einströmende Wasser ausgast, und somit - atomar betrachtet -innerhalb der Flüssigkeit Platz für den in die Flüssigkeit einzulagernden Sauerstoff geschaffen wird. So weist gewöhnliches Quellwasser abhängig von der Jahreszeit und damit den Umwelteinflüssen und den durchsickerten Gesteinsschichten unterschiedliche Gaskonzentrationen bzw. -anteile auf, die vor dem Zusetzen des Sauerstoffes zum Wasser beseitigt werden müssen. Nach der Entgasung gelangt das Wasser in die Druckförderpumpe 3, die es unter einem Druck zwischen 5 und 10 bar in den ersten Mischeinlauf 21 der Injektor-Düse 4 pumpt, die beispielsweise durch ein Venturi-Rohr gebildet sein kann, und deren Auslauf 22 mit dem Flüssigkeitseingang eines Gaseinmischungsreaktors 6 verbunden ist.

Über einen zweiten Mischeinlauf 23 wird aus Gasdruckbehältern 16 und 17 entweder reiner Sauerstoff oder ein Sauerstoff-Gasgemisch der Injektor-Düse 4 unter einem Zerstäubungsdruck p₂ zugeleitet. Im Druckbehälter 17 befindet sich im gezeigten Ausführungsbeispiel der Sauerstoff und im Druckbehälter 16 Kohlendioxid, welche Behälter 16 und 17 über zugehörige Mengenregler 13 bzw. 14 in eine gemeinsame Zuleitung 24 münden, die einerseits über den zweiten Mischeinlauf 23 mit der Injektor-Düse 4 und über ein Reaktorfüllventil 18 mit einem Gas-Fülleingang des Gaseinmischungsreaktors 6 verbunden ist.

Über die Mengenregler 13, 14 kann der gewünschte Gehalt an Sauerstoff bzw. Sauerstoff-Gasgemisch eingestellt werden, mit dem die Flüssigkeit angereichert werden soll. Je nach der gewählten Durchflußmenge an Flüssigkeit wird der entsprechende Sauerstoff- bzw. Gasgemischmassendurchfluß, der in die Injektor-Düse 4 einströmt, eingestellt.

Über den Gas-Fülleingang wird der Gaseinmischungsreaktor 6 vor dem ersten Durchlauf von Flüssigkeit zu ungefähr zwei Drittel mit Sauerstoff bzw. mit Sauerstoff-Gasgemisch gefüllt. Nach diesem Füllvorgang kann mit dem permanenten Durchströmen der mit Sauerstoff bzw. Sauerstoff-Gasgemisch versetzten Flüssigkeit über den Auslauf 22 der Injektor-Düse 4 begonnen werden, wobei der Flüssigkeitsfüllstand des Gaseinmischungsreaktors 6 zwischen einem Tiefst- und einem Höchststand, vorzugsweise zwischen 40% bzw. 60%, gehalten wird, wodurch eine ausreichende Pufferwirkung für das nachfolgende Abfüllen in die Flaschen ermöglicht wird.

Bei Erreichen des Tiefststandes wird die kontinuierliche Zufuhr von Sauerstoff bzw. Sauerstoff-Gasgemisch zur Flüssigkeit vor dem Flüssigkeitseingang des Gaseinmischungsreaktors 6 eingestellt und stattdessen in einem Umlaufbetrieb über ein Gas-Kreislaufventil 5 solange Sauerstoff bzw. Sauerstoff-Gasgemisch über einen Gasabführausgang aus dem Gaseinmischungsreaktor 6 abgesaugt und der Flüssigkeit vor dem Flüssigkeitseingang des Gaseinmischungsreaktors 6 zugeführt, bis der Höchststand der Flüssigkeit im Gaseinmischungsreaktor 6 wieder erreicht ist, woraufhin der Flüssigkeit vor dem Flüssigkeitseingang des Reaktors 6 wieder kontinuierlich Sauerstoff bzw. Sauerstoff-Gasgemisch zugeführt wird.

Die durch die in den Gaseinmischungsreaktor 6 einströmende Flüssigkeit entstehende Komprimierung des im Reaktor 6 befindlichen Sauerstoffes bedingt eine Druckerhöhung in diesem, wodurch sich ein Druck p₃ ungefähr zwischen 5 bis 10 bar ausbildet, der durch ein dem Reaktorausgang nachgeschaltetes Reaktorgegendruckventil 8 aufrecht erhalten wird. Der zum Anreichern angewandte Zerstäubungsdruck p₂ ist höher als der im Gaseinmischungsreaktor sich ausbildende Druck p₃.

Die Injektor-Düse 4 erhöht die Oberfläche der einströmenden, entgasten Flüssigkeit, wodurch der zugeführte Sauerstoff bzw. das zugeführte Sauerstoff-Gasgemisch sehr viel leichter in die Flüssigkeit als im unveränderten Zustand eingebaut werden kann. Aufgrund dieses Umstandes gelingt es auch sehr viel höhere Mengen an Sauerstoff in der Flüssigkeit zu lösen oder zu binden, als es aus dem Stand der Technik bekannt geworden ist.

Eine Maßnahme, den sehr hohen Sauerstoffgehalt in der angereicherten Flüssigkeit zu halten, besteht darin, diese nach dem Zumischen von Sauerstoff bzw. Sauerstoff-Gasgemisch über den Flüssigkeitseingang laminar in den Gaseinmischungsreaktor 6 einströmen zu lassen. Auf diese Weise gelangt die Flüssigkeit völlig beruhigt, also ohne weitere Verwirbelungen in den Reaktor 6 und verliert dadurch nicht an Sauerstoff- bzw. Sauerstoff-Gasgemisch-Bestandteilen. Durch die Sauerstoff- bzw. Sauerstoff-Gasgemisch-Vorfüllung wird ebenfalls ein vorzeitiges Austreten des Sauerstoffes bzw. des Sauerstoff-Gasgemisches verhindert. Nach dem Gegendruckventil 8 wird die angereicherte Flüssigkeit mittels einer Förderpumpe 9 in einen Vorratstank 10 für eine nachfolgende Flaschenfüllmaschine 12 gepumpt und dort ein Druck p₄ (z.B. 5 bis 10 bar) erzeugt, welcher kleiner oder gleich dem Druck p₃ des Gaseinmischungsreaktors 6 zu sein hat. Aus dem Vorratstank 10 wird das angereicherte Wasser über eine Druckabfüllpumpe 11 einer Flaschenfüllmaschine 12 unter einem zweiten Druck p₅ (z.B. 3,5 bar) zugeführt, der wiederum kleiner oder gleich dem Druck p₄ ist.

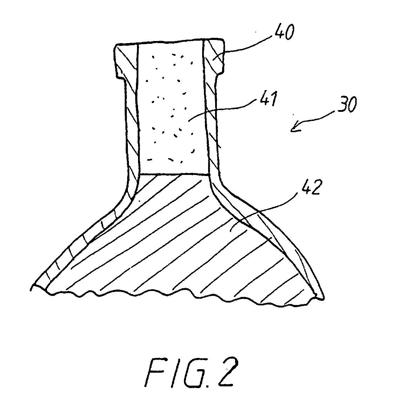

Jede einzelne, zu füllende Flasche 30 wird vor dem Befüllvorgang über einen Mengenregler 15 aus dem Sauerstoff-Tank 17 mit Sauerstoff gefüllt und dabei unter einem ersten Druck p6 (z.B. 3 bar) vorgespannt. Nachfolgend wird die mit Sauerstoff angereicherte Flüssigkeit unter dem zweiten, den ersten übersteigenden Druck p₅ in die druckdicht abgeschlossenen Flaschen 30 bis auf ein aus Sauerstoff bzw. Sauerstoffgemisch bestehendes, in der Flasche 30 verbleibendes Restvolumen 41 (Fig.2) im Bereich des oberen Behälterrandes 40 gefüllt, wobei die Flüssigkeit von der Anreicherung bis zur Abfüllung unter einem gegenüber dem atmosphärischen Druck erhöhten Druck steht, der erst vor dem Verschließen der Flasche 30 ausgeglichen wird.

Die Flaschen 30 werden während der Vorabfüllung mit Sauerstoff oder einem Sauerstoff-Gasgemisch über einen geeigneten Füllverschluß unter dem Druck p₆ gehalten. Über einen dafür vorgesehenen Fülleinlaß tritt die angereicherte Flüssigkeit unter dem höheren Druck p₅ in das Flascheninnere ein und verdrängt den darin befindlichen Sauerstoff bis auf ein Restvolumen 41 im Flaschenhals 40 (Fig.2), das nun mit einer Sauerstoffhaube unter dem Druck p₅ gefüllt ist. Das überschüssige Sauerstoffvolumen der Vorabfüllung kann über ein geeignetes Überdruckventil entweichen. Danach werden die Flaschen dem Atmosphärendruck ausgesetzt, in dem der Druckverschluß automatisch abgenommen wird. Die Flüssigkeit 42 (Fig.2) entspannt sich, ohne daß dabei ein nennenswerter Sauerstoffgehalt aus dieser entweicht. Danach können die Flaschen 30 einer automatischen Verschließeinrichtung zugeführt werden, in der beispielsweise Kronenkorken aufgesetzt werden.

Auf diese Weise kann ein Sauerstoff- bzw. ein Sauerstoff-Gasgemisch-Gehalt in den abgefüllten Behältern erzielt werden, der zwischen 80 mg/l und 500 mg/l liegt, und der auch nach Transport und Lagerung der Flaschen nachweisbar ist. Damit können verschiedenste Getränke auf wirkungsvolle Weise mit Sauerstoff angereichert werden.

Der sehr hohe Sauerstoffanteil im Getränk kann auf vielfältige Weise zu prophylaktischen und therapeutischen Zwecken in der Heilkunde aber auch zur alltäglichen Steigerung der Leistungsfähigkeit bei erschöpftem oder belastetem Organismus angewandt werden. Weiters ist festgestellt worden, daß der erreichbare hohe Sauerstoffgehalt die Sterilisierung von Getränken unnötig macht, sodaß Keime oder Bakterien die zu Fäulnis oder Gärung führen können, ohne Hitzebehandlung abgetötet werden. Der Geschmack und der Vitamingehalt, beispielsweise von Obstsäften, können auf diese Weise weitaus besser erhalten werden. Generell erzeugt die erfrischende Wirkung des hohen Sauerstoffgehalts ein gesteigertes Wohlbefinden.

Wird das Wasser bzw. die Flüssigkeit mit einem Sauerstoff-Gasgemisch angereichert, so kann eine Vorabfüllung der Flaschen mit dem entsprechenden Sauerstoff-Gasgemisch vorgenommen werden, das nach dem Einfüllen der Flüssigkeit in die Flaschen ebenfalls eine Haube bildet, die ein Abgasen des Sauerstoff-Gasgemisches verhindert. Dieser konkrete Vorabfüllvorgang ist im Schema gemäß Fig.1 nicht realisiert. Durch den beschriebenen Vorgang ist es möglich, ein mit Kohlendioxid und Sauerstoff angereichertes Getränk herzustellen, das bei einem sehr hohen Sauerstoffgehalt abfüllbar ist.

## Patentansprüche

1. Verfahren zur Herstellung und Abfüllung von mit Sauerstoff oder einem Sauerstoff-Gasgemisch angereicherten Flüssigkeiten, insbesondere Getränken, in Behälter, insbesondere Flaschen, wobei die Flüssigkeit entgast, danach mit Sauerstoff und gegebenenfalls anderen Gasen in gelöster und/oder gebundener Form angereichert und in Behälter abgefüllt wird, woraufhin diese druckdicht verschlossen werden, **dadurch gekennzeichnet, daß** jeder einzelne zu füllende Behälter (30) vor dem Befüllen mit angereicherter Flüssigkeit mit Sauerstoff oder einem Sauerstoff-Gasgemisch gefüllt und dabei unter einem ersten Druck (p₆) vorgespannt wird, und daß nachfolgend die mit Sauerstoff oder einem Sauerstoff-Gasgemisch angereicherte Flüssigkeit unter einem zweiten, den ersten übersteigenden Druck (p₅) in den druckdicht abgeschlossenen Behälter (30) bis auf ein aus Sauerstoff bzw. Sauerstoffgemisch bestehendes, im Behälter (30) verbleibendes Restvolumen (41) im Bereich des oberen Behälterrandes (40) gefüllt wird, wobei die Flüssigkeit von der Anreicherung bis zur Abfüllung unter einem gegenüber dem atmosphärischen Druck erhöhten Druck steht, der erst vor dem Verschließen des Behälters (30) ausgeglichen wird.

2. Verfahren nach Anspruch 1, **dadurch gekennzeichnet, daß** die mit Sauerstoff bzw. Sauerstoff-Gasgemisch angereicherte Flüssigkeit in einen Gaseinmischungsreaktor (6), in welchem die angereicherte Flüssigkeit vor dem Abfüllprozeß zwischengespeichert wird, vorzugsweise von oben, laminar einströmen gelassen wird.

3. Verfahren nach Anspruch 1 oder 2, **dadurch gekennzeichnet, daß** der Sauerstoff bzw. das Sauerstoff-Gasgemisch der anzureichernden Flüssigkeit mittels einer Injektordüse (4), vorzugsweise eines Venturi-Rohrs, unter einem Zerstäubungsdruck (p₂) beigemischt wird.

4. Verfahren nach Anspruch 2 und 3, **dadurch gekennzeichnet, daß** vor dem ersten Durchlauf von angereicherter Flüssigkeit der Gaseinmischungsreaktor (6) mit Sauerstoff bzw. Sauerstoff-Gasgemisch, vorzugsweise zu zwei Drittel, gefüllt und unter einem Reaktordruck (p₃), der kleiner als der Zerstäubungsdruck (p₂) ist, vorgespannt wird, und daß danach die angereicherte Flüssigkeit den Gaseinmischungsreaktor (6) durchströmen gelassen wird.

5. Verfahren nach Anspruch 2 bis 4, **dadurch gekennzeichnet, daß** der Flüssigkeitsfüllstand innerhalb des von der angereicherten Flüssigkeit durchströmten Gaseinmischungsreaktors (6) zwischen einem Tiefst- und einem Höchststand, vorzugsweise zwischen 40% und 60%, gehalten wird, wobei bei Erreichen des Tiefststandes die kontinuierliche Zufuhr von Sauerstoff bzw. Sauerstoff-Gasgemisch zur Flüssigkeit vor dem Flüssigkeitseingang des Gaseinmischungsreaktors (6) eingestellt wird und stattdessen in einem Umlaufbetrieb solange Sauerstoff bzw. Sauerstoff-Gasgemisch über einen Gasabführausgang aus dem Gaseinmischungsreaktor (6) abgesaugt und der Flüssigkeit vor dem Flüssigkeitseingang des Gaseinmischungsreaktors (6) zugeführt wird, bis der Höchststand der Flüssigkeit im Gaseinmischungsreaktor (6) wieder erreicht ist, woraufhin der Flüssigkeit vor dem Flüssigkeitseingang des Reaktors (6) wieder kontinuierlich Sauerstoff bzw. Sauerstoff-Gasgemisch zugeführt wird.

## Claims

1. A method for producing and filling liquids enriched with oxygen or an oxygen-and-gas mixture, especially beverages, into vessels, especially bottles, with the liquid being degassed, thereafter enriched with oxygen, and optionally other gases, in dissolved and/or combined state and filled into vessels, whereupon the same are pressure sealed, **characterized in that** every single vessel (30) to be filled is filled prior to filling with an enriched liquid with oxygen or an oxygen-and-gas mixture and is pretensioned thereby under a first pressure (p₆) and that thereafter the liquid enriched with oxygen or an oxygen-and-gas mixture is filled under a second pressure (p₅) exceeding the first pressure (p₆) into the pressure sealed vessel (30) up to a residual volume (41) which remains in the vessel (30) in the zone of the upper vessel edge (40) and consists of oxygen or an oxygen mixture, with the liquid standing under a pressure which is increased with respect to the atmospheric pressure from the enrichment up to the filling, which increased pressure is only evened out prior to the closure of the vessel (30).

2. A method as claimed in claim 1, **characterized in that** the liquid enriched with oxygen or the oxygen-and-gas mixture is allowed to flow in laminarly, preferably from above, into a gas merging reactor (6) in which the enriched liquid is stored intermediately prior to the filling process.

3. A method as claimed in claim 1 or 2, **characterized in that** the oxygen or the oxygen-and-gas mixture of the liquid to be enriched is admixed by means of an injector nozzle (4), preferably a Venturi tube, under an atomizing pressure (p₂).

4. A method as claimed in claim 2 and 3, **characterized in that** prior to the first passage of enriched liquid the gas merging reactor (6) is filled, preferably to two-thirds, with oxygen or the oxygen-and-gas mixture and is pretensioned under a reactor pressure (p₃) which is smaller than the atomizing pressure (p₂), and that thereafter the enriched liquid is allowed to flow through the gas merging reactor (6).

5. A method as claimed in claim 2 to 4, **characterized in that** the liquid filling level of the gas merging reactor (6) which is flowed through by the enriched liquid is held between a minimum and maximum level, preferably, between 40% and 60%, with the continuous supply of oxygen or the oxygen-and-gas mixture to the liquid being stopped before the liquid entrance of the gas merging reactor (6) on reaching the minimum level and instead oxygen or oxygen-and-gas mixture being sucked off in a circulatory operation via a gas discharge outlet from the gas merging reactor (6) and being supplied to the liquid in front of the liquid entrance of the gas merging reactor (6) until the maximum level of the liquid has been reached again in the gas merging reactor (6), whereupon the liquid is supplied again continuously with oxygen or the oxygen-and-gas mixture before the liquid entrance of the reactor (6).

## Revendications

1. Procédé de fabrication de liquides enrichis en oxygène ou en un mélange gazeux oxygéné, en particulier de boissons, et de conditionnement de ceux-ci dans des récipients, en particulier des bouteilles, dans lequel le liquide est dégazé puis enrichi en oxygène et éventuellement en d'autres gaz dissous ou liés et versé dans les récipients qui sont ensuite fermés de manière étanche à la pression, **caractérisé en ce que** chaque récipient (30) à remplir est rempli d'oxygène ou d'un mélange gazeux oxygéné avant le remplissage avec du liquide enrichi et précontraint sous une première pression (p₆), et **en ce que** le liquide enrichi en oxygène ou en mélange gazeux oxygéné est ensuite versé sous une deuxième pression (p₅) dépassant la première pression (p₆) dans le récipient (30) fermé de manière étanche à la pression, en ménageant dans le récipient (30) un volume résiduel (41) composé d'oxygène ou de mélange oxygéné au niveau du bord supérieur du récipient (40), le liquide se trouvant, avant le conditionnement, sous une pression supérieure à la pression atmosphérique, qui n'est équilibrée qu'avant la fermeture du récipient (30).

2. Procédé selon la revendication 1, **caractérisé en ce que** le liquide enrichi en oxygène ou en mélange gazeux oxygéné est amené en écoulement laminaire, de préférence par le haut, dans un réacteur d'addition de gaz (6) dans lequel il est entreposé avant le remplissage.

3. Procédé selon la revendication 1 ou 2, **caractérisé en ce que** l'oxygène ou le mélange gazeux oxygéné est mélangé au liquide à enrichir au moyen d'une buse d'injection (4), de préférence un venturi, sous une pression de pulvérisation (p₂).

4. Procédé selon les revendications 2 et 3, **caractérisé en ce qu'**avant la première arrivée de liquide enrichi, le réacteur d'addition de gaz (6) est rempli d'oxygène ou de mélange gazeux oxygéné, de préférence jusqu'aux deux tiers, et précontraint sous une pression (p₃) inférieure à la pression de pulvérisation (p₂), et **en ce que** le liquide enrichi est ensuite amené dans le réacteur d'addition de gaz (6).

5. Procédé selon les revendications 2 à 4, **caractérisé en ce que** le niveau de liquide à l'intérieur du réacteur d'addition de gaz (6) parcouru par le liquide enrichi est maintenu entre un minimum et un maximum, de préférence entre 40 % et 60 %, l'ajout continu d'oxygène ou de mélange gazeux oxygéné avant l'entrée de liquide du réacteur d'addition de gaz (6) étant arrêté lorsque le niveau minimum est atteint et l'oxygène ou le mélange gazeux oxygéné étant, au lieu de cela, aspiré hors du réacteur d'addition de gaz (6) par une extraction de gaz et mis en circulation et amené au liquide avant l'entrée de celui-ci dans le réacteur d'addition de gaz (6), jusqu'à ce que le niveau maximal du liquide dans le réacteur d'addition de gaz (6) soit à nouveau atteint, après quoi de l'oxygène ou du mélange gazeux oxygéné est à nouveau amené en continu au liquide avant l'entrée du liquide dans le réacteur d'addition de gaz (6).
